# EUROPÄISCHE PATENTSCHRIFT

(11) **EP 1 896 218 B1**
(45) Veröffentlichungstag und Bekanntmachung des Hinweises auf die Patenterteilung: **02.03.2011**
(21) Anmeldenummer: 06742744.3
(22) Anmeldetag: 28.04.2006
(51) Int. Cl.: B23K 26/06, H01S 3/08

(54) **OPTISCHES MODUL ZUM EINBAU IN DEN LASER EINER LASERBEARBEITUNGSMASCHINE**
OPTICAL MODULE FOR INSTALLING IN THE LASER OF A LASER MACHINING MACHINE
MODULE OPTIQUE A MONTER DANS LE LASER D'UNE MACHINE D'USINAGE LASER

(30) Priorität: 29.04.2005 DE 202005006838 U
(43) Veröffentlichungstag der Anmeldung: 12.03.2008
(73) Patentinhaber: TRUMPF Werkzeugmaschinen GmbH + Co. KG, 71254 Ditzingen (DE)
(72) Erfinder: WEICK, Jürgen-Michael, 71679 Asperg (DE)
(74) Vertreter: Kohler Schmid Möbus
(86) Internationale Anmeldenummer: PCT/EP2006/003995
(87) Internationale Veröffentlichungsnummer: WO 2006/117153

(56) Entgegenhaltungen:
- DE-A1- 4 108 419
- DE-U1- 9 215 361
- FR-A- 2 786 938
- US-A1- 2002 003 131

## Beschreibung

Die Erfindung betrifft die Aufweitung des Laserstrahls einer Laserbearbeitungsmaschine nach dem Oberbegriff des Anspruchs 1 (siehe die US-A-2002 0003131).

Die Aufweitung des aus dem Laser austretenden Laserstrahls einer Laserbearbeitungsmaschine erfolgt bisher über gekrümmte Auskoppelspiegel des Lasers. Diese sind aufwändig zu fertigen. Die Aufweitung des Laserstrahls ist fest und im Betrieb der Laserbearbeitungsmaschine nicht verstellbar.

Eine adaptive Verstellung von Spiegeln im Laser ist noch nicht in der Serie realisiert.

Die zur Laserbearbeitung, insbesondere zum Laserschneiden, erforderliche zirkulare Polarisation wird in der Regel in der Laserbearbeitungsmaschinen erzeugt.

Der Anmelder hat sich die Aufgabe gestellt, den konstruktiven Aufbau zur einstellbaren Strahlaufweitung und zirkularen Polarisation einfacher gestalten zu können.

Diese Aufgabe wird durch eine Vorrichtung gemäß Anspruch 1 gelöst.

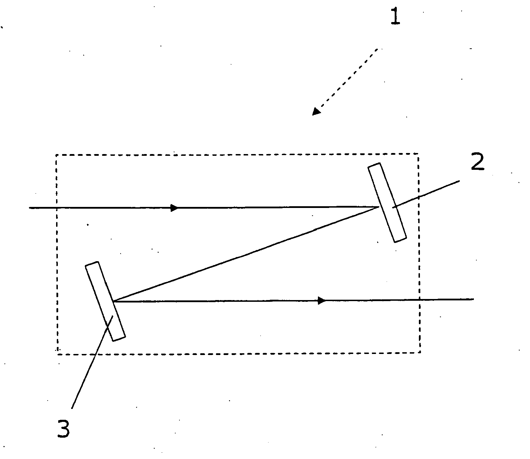

Ein Ausführungsbeispiel der Erfindung ist in der Zeichnung schematisch dargestellt und wird nachfolgend mit Bezug zur Figur der Zeichnung näher erläutert. Die Figur zeigt ein optisches Modul zum Einbau in eine Laserbearbeitungsmaschine.

Ein Modul 1 ist zur Integration unter einer Laserhaube einer Laserbearbeitungsmaschine konzipiert, kann aber auch in den Strahlengang einer anderen Laserbearbeitungsmaschine eingebaut werden. Es bewirkt einen Parallelversatz des Laserstrahls in y- und z-Richtung. Es ist für Abstände von > 3 m zwischen dem letztem Spiegel 3 des Moduls 1 und der Fokussieroptik vorgesehen.

Der erste Spiegel 2 des Moduls 1 ist ein adaptiver Spiegel, der einen Verstellbereich von -10 m bis +10 m hat. Bei den gängigen Rohstrahldurchmessern der Schneidlaser kann ein Laserstrahl problemlos mit einem Umlenkwinkel von 15° mit hoher Qualität über diesen adaptiven Spiegel 2 abgebildet werden. Der Spiegel 2 hat eine 45° phasenschiebende Beschichtung. Die Position des Spiegels 2 kann 850 mm hinter einem Auskoppelspiegel des Lasers liegen.

Als zweiter Spiegel 3 wird ein fester (über die Maschinengegebenheiten auszulegender) sphärischer Spiegel eingesetzt, der den Strahl auf die Entfernung zur Fokussieroptik abbildet. Dieser Spiegel hat ebenfalls eine 45° phasenschiebende Beschichtung. Bedingung hierfür ist, dass das Coating von den üblichen 45° Einfallswinkel auf den hier verwendeten Winkel (15°) angepasst wird und dass die Faltungsebene der beiden Spiegel um 45° zur Polarisationsrichtung gedreht ist. Als technisch realisierbare Untergrenze für eine 45° phasenschiebende Schicht wurden 15° Einfallswinkel ermittelt. Kleinere Winkel würden zu zu großen Absorptionen führen.

Eingangsstrahl und Ausgangsstrahl der z-Faltung sind parallel.

Die Verstellung des adaptiven Spiegels 2 kann entweder über einen fest eingestellten Druckminderer erfolgen oder flexibel mit einem Proportionalventil.

## Patentansprüche

1. Vorrichtung zur Aufweitung eines Laserstrahls einer Laserbearbeitungsmaschine,
mit einem ersten Spiegel (2) und mit einem sphärischen, zweiten Spiegel (3), wobei beide Spiegel (2, 3) eine phasenschiebende Beschichtung aufweisen,
**dadurch gekennzeichnet,**
**dass** der erste Spiegel (2) als adaptiver Spiegel ausgebildet ist,
**dass** beide Spiegel jeweils eine 45° phasenschiebende Beschichtung aufweisen, und
**dass** die Aufweitungsvorrichtung als optisches Modul (1) zum Einbau in den Laser der Laserbearbeitungsmaschine ausgebildet ist.

2. Aufweitungsvorrichtung nach Anspruch 1, **dadurch gekennzeichnet, dass** der in das optische Modul (1) einfallende und der aus dem optischen Modul (1) austretende Laserstrahl parallel zu einander verlaufen.

3. Aufweitungsvorrichtung nach Anspruch 1 oder 2, **dadurch gekennzeichnet, dass** der Umlenkwinkel am adaptiven ersten Spiegel (2) mindestens 15°, insbesondere 15°, beträgt.

## Claims

1. Device for widening a laser beam of a laser processing machine, comprising a first mirror (2) and a spherical second mirror (3), wherein both mirrors (2, 3) have a phase-shifting coating,
**characterized in that**
the first mirror (2) is formed as an adaptive mirror,
each of the two mirrors has a 45° phase-shifting coating, and
the widening device is formed as an optical module (1) for installation into the laser of the laser processing machine.

2. Widening device according to claim 1, **characterized in that** the laser beam that is incident on the optical module (1) and the laser beam that emanates from the optical module (1) extend parallel with respect to each other.

3. Widening device according to claim 1 or 2, **characterized in that** the deflection angle on the adaptive first mirror (2) is at least 15°, in particular 15°.

## Revendications

1. Dispositif pour élargir un faisceau laser d'une machine d'usinage par laser,
avec un premier miroir (2) et un deuxième miroir sphérique (3), les deux miroirs présentant un revêtement déphaseur,
**caractérisé en ce**
**que** le premier miroir (2) est réalisé sous la forme d'un miroir adaptatif,
**que** les deux miroirs présentent un revêtement déphaseur de 45°, et
**que** le dispositif d'élargissement est réalisé sous la forme d'un module optique (1) conçu pour être monté dans le laser de la machine d'usinage par laser.

2. Dispositif d'élargissement selon la revendication 1, **caractérisé en ce que** le faisceau laser entrant dans le module optique (1) et le faisceau laser sortant du module optique (1) courent parallèlement l'un à l'autre.

3. Dispositif d'élargissement selon la revendication 1 ou 2, **caractérisé en ce que** l'angle de déviation sur le premier miroir adaptatif (2) a une valeur d'au moins 15°, en particulier de 15°.
